# EUROPEAN PATENT SPECIFICATION

(11) **EP 4 224 995 B1**
(45) Date of publication and mention of the grant of the patent: **01.01.2025**
(21) Application number: 22154663.3
(22) Date of filing: 02.02.2022
(51) Int. Cl.: H05B 45/59, H02M 1/44, H05B 45/3725, H02M 1/00, H02M 3/00

(54) **FEEDBACK-CONTROLLED SWITCHED CONVERTER FOR A LED LOAD**
RÜCKKOPPLUNGSGESTEUERTER SCHALTWANDLER FÜR EINE LED-LAST
CONVERTISSEUR COMMUTÉ COMMANDÉ PAR RÉTROACTION POUR UNE CHARGE À DEL

(43) Date of publication of application: 09.08.2023
(73) Proprietor: Tridonic GmbH & Co KG, 6851 Dornbirn (AT)
(72) Inventor: Egle, Manuel, 6850 Dornbirn (AT); Saccavini, Lukas, 6850 Dornbirn (AT); Auer, Hans, 6850 Dornbirn (AT)
(74) Representative: Rupp, Christian

(56) References cited:
- EP-A1- 3 054 571
- WO-A2-2019/168399

## Description

### TECHNICAL FIELD OF THE INVENTION

The invention relates to a feedback-controlled switched converter for supplying an LED load. The invention further relates to a method for switching a switched converter for supplying the LED load.

### BACKGROUND OF THE INVENTION

Switched-mode power converters (SMPCs), such as LLC converters or buck converters, can be used in electronic devices (such as e.g. LED converter) in order to convert electric power with high efficiency. However, high levels of electromagnetic interference (EMI) can occur in SMPCs. These high levels of EMI can be both conducted and radiated.

Therefore, when designing a SMPC, attention should be payed to the reduction of EMI. In order to reduce the EMI, different techniques can be used, for example, filtering, shielding or soft-switching. Moreover, another technique, the so-called spread-spectrum technique, can be used in order to reduce EMI in SMPCs. Moreover, the suppression of peak EMI levels can also be achieved by the modulation of the switching frequency of the converter, since the switching frequency modulation (SFM) can reduce both conducted and radiated EMI.

However, if the SFM is not done properly in the converter, this can cause a visible flicker in the light output.

Especially, the activation /deactivation of the SFM, when done while the SFM modulation signal is high, can lead to a jump in the operation frequency which can lead to a visible jump in the light output of LEDs supplied by such converter.

EP 3054571 A1 discloses a feedback-controlled switched converter having the features of the preambles of the independent claims.

WO 2019/168399 A2 discloses a LED power converter.

Thus, it is an objective to provide for an improved switched converter for a LED load which allows to reduce the EMI and/or the visible flicker in the light output of a supplied LED load.

### SUMMARY OF THE INVENTION

The object of the present invention is achieved by the solution provided in the enclosed independent claims. Advantageous implementations of the present invention are further defined in the dependent claims.

According to a first aspect of the invention, a switched converter is provided. The switched converter comprises at least one (preferably one switch or two switches forming a half bridge, or four switches forming a full bridge) switch, terminals for supplying an LED load, and a control unit being supplied with a feedback signal (generated by a feedback signal generating unit) indicating a load current of the LED load. The control unit is configured to generate an output signal on the basis of the feedback signal, combine the output signal with a periodic modulation signal in order to obtain a control signal, the control signal being configured to set an operation parameter of the at least one switch, and apply the control signal to the at least one switch. Moreover, the switched converter comprises means for enabling/disabling the periodic modulation signal, wherein the means for enabling/disabling is configured to enable/disable the periodic modulation signal only at time periods of the periodic modulation signal in which an amplitude of the periodic modulation signal is lower than an (preset) amplitude threshold.

In a preferred embodiment, the means for enabling/disabling the periodic modulation signal is configured to only enable/disable the periodic modulation signal at first time periods of the periodic modulation signal being centered at zero-crossings of the periodic modulation signal, these first time periods being separated from each other by time periods in which no enabling/disabling of the modulation signal is performed.

If an event triggering the enabling/disabling of the modulation signal occurs during time periods/amplitudes during which the enabling/disabling shall not be performed, means are provided for delaying the execution of the enabling/disabling until the next amplitude/time period starts in which the enabling/disabling is allowed.

An event triggering the enabling can be when the load at the output terminals raises (e.g., by dimming) beyond a preset load threshold.

An event triggering the disabling can be when the load at the output terminals drops (e.g., by dimming) below a preset load threshold.

This provides the advantage that enabling/disabling is only performed in amplitude regions/time periods in which the enabling/disabling does only lead to a low or no visible jump in the light output.

In a preferred embodiment, the switched converter further comprises a signal generator, wherein the signal generator is configured to generate the periodic modulation signal.

In another preferred embodiment, the periodic modulation signal is derived from a signal within the converter, such as, e.g., a ripple in the DC supply voltage of the converter.

This provides the advantage that a visible flicker in the output light of the LED is reduced, preferably, eliminated.

In a preferred embodiment, the means for enabling/disabling the periodic modulation signal is configured to detect a maximum amplitude of the periodic modulation signal and wherein the amplitude threshold is less than 10% of the maximum amplitude of the periodic modulation signal.

This provides the advantage that the enable/disable signal is delayed close to the next zero crossing of the periodic modulation signal and, in such a way, there is no significant instantaneous jump in the output signal provided to the LED load. Therefore, the flicker in the output light is advantageously reduced.

In an alternative embodiment, the means for enabling/disabling the periodic modulation signal is configured to detect a change in a sign of the modulation signal. The change enable/disable signal thus is delayed until the next zero-crossing event of the modulation signal and will be executed upon detection of the zero-crossing.

In particular, the means for enabling/disabling the periodic modulation signal is configured to detect the change in the sign by detecting that the sign of the measured signal or modulation signal changes from positive to negative values, or vice versa, during the crossing of the zero point. Since a digital evaluation of the signals is performed (sensing by an analog-to-digital converter (ADC) and digital processing of the signals) such evaluation is, advantageously, easy to implement.

In a preferred embodiment, the periodic modulation signal is a triangle waveform or a sinusoidal waveform.

This provides the advantage that the suppression of peak EMI levels can be achieved by the modulation of switching frequency by making use of periodic modulating waveforms, such as sine, triangle or saw-tooth, therefore, spreading the spectrum of SMPC voltages and currents.

In a preferred embodiment, wherein the periodic modulation signal is based on an inverted input voltage of the switched converter.

This provides the advantage that a flicker in the output light of the LED is significantly reduced.

In a preferred embodiment, the operation parameter of the switched converter, such as a switching frequency or a peak current value of the switched converter, is configured to determine a power provided at the terminals for supplying the LED load.

In a preferred embodiment, the control unit comprises a proportional integral, PI, regulator.

This provide the advantage that well-known regulators, such as PI regulators, can be used.

In a preferred embodiment, the converter is an LLC converter, a flyback converter or a buck converter.

This provides the advantage that well-known converters can be used, thus facilitating the implementation of this embodiment of the invention.

According to a second aspect, a LED lighting means is provided. The LED lighting means comprises the switched converter of the first aspect and any one of the implementation forms thereof and a LED load connected to output terminals of the switched converter.

According to a third aspect, a method for switching a switching converter for supplying a LED load is provided. The method comprises the following steps: supplying a control unit with a feedback signal indicating a load current of the LED load; generating an output signal on the basis of the feedback signal; combining the output signal with a periodic modulation signal in order to obtain a control signal, the control signal being configured to set an operation parameter of the at least one switch; applying the control signal to at least one switch of the switched converter; and enabling/disabling the periodic modulation signal only at time periods in which an amplitude of the periodic modulation signal is lower than an amplitude threshold at first time periods of the periodic modulation signal being centered at zero-crossings of the periodic modulation signal, these time periods being separated from each other by time periods in which no enabling/disabling of the modulation signal is performed.

In an alternative embodiment, the means for enabling/disabling the periodic modulation signal is configured to detect a change in a sign of the modulation signal. The change enable/disable signal thus is delayed until the next zero-crossing event of the modulation signal and will be executed upon detection of the zero-crossing.

In particular, the means for enabling/disabling the periodic modulation signal is configured to detect the change in the sign by detecting that the sign of the measured signal or modulation signal changes from positive to negative values, or vice versa, during the crossing of the zero point.

In a preferred embodiment, the method further comprises the step of generating the periodic modulation signal by a signal generator in the switched converter.

In a preferred embodiment, the method further comprises the step of deriving the periodic modulation signal from a signal within the converter, such as e.g. a ripple in the dc supply voltage of the switched converter.

In a preferred embodiment, the method further comprises the step of detecting a maximum amplitude of the periodic modulation signal, wherein the amplitude threshold is less than 10% of the maximum amplitude of the periodic modulation signal.

In a preferred embodiment, the periodic modulation signal is a triangle waveform or a sinusoidal waveform.

The method according to the third aspect and the implementation forms thereof provide the same advantages as the switched converter of the first aspect and the implementation forms thereof.

### BRIEF DESCRIPTION OF THE DRAWINGS

The invention will be explained in the followings together with the figures.
- Fig. 1: shows a schematic representation of a LED lighting means comprising a switched converter according to an embodiment of the invention;
- Fig. 2: shows a schematic representation of a LED lighting means comprising a switched converter according to an embodiment of the invention;
- Fig. 3: shows a schematic representation of a LED lighting means comprising a switched converter according to an embodiment of the invention;
- Fig. 4: shows a schematic representation of a modulation signal, a modulated signal and an enable/disable signal according to prior art.
- Fig. 5: shows a schematic representation of a modulation signal, a modulated signal and an enable/disable signal according to an embodiment of the invention; and
- Fig. 6: shows a schematic representation of a method for switching a switched converter according to an embodiment of the invention.

### DETAILED DESCRIPTION OF THE PREFERRED EMBODIMENTS

Aspects of the present invention are described herein in the context of a switched converter.

The present invention is described more fully hereinafter with reference to the accompanying drawings, in which various aspects of the present invention are shown. Rather, these aspects are provided so that this disclosure will be thorough and complete, and will fully convey the scope of the present invention to those skilled in the art. The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

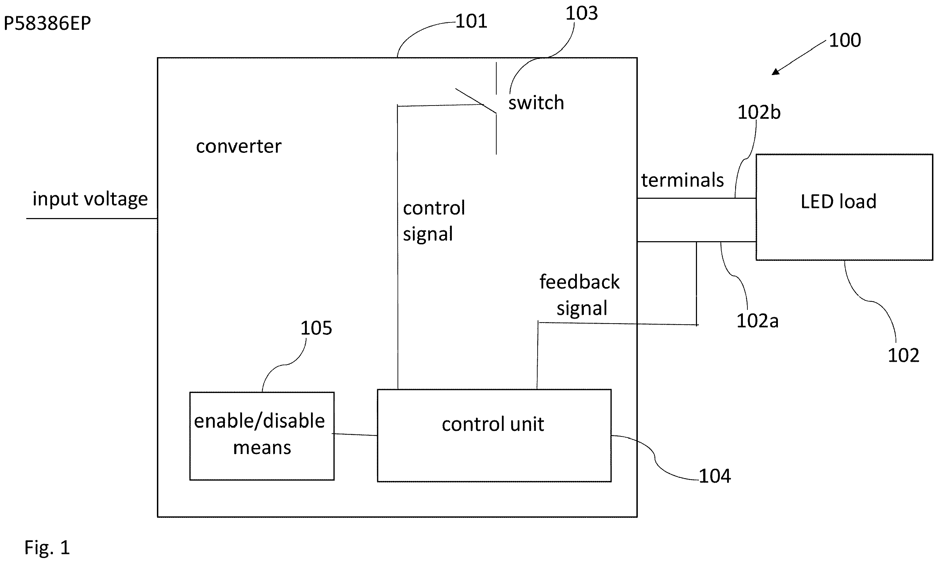

Now referring to Fig. 1, a schematic representation of a LED lighting means 100 comprising a switched converter 101 is shown according to an embodiment of the invention.

The LED lighting means comprises the switched converter 101 and the LED load 102, wherein the LED load 102 is connected to the switched converter 101 by means of the supplying terminals 102a and 102b.

The switched converter 101 comprises at least one switch 103, the terminals 102a, 102b for supplying the LED load 102, and a control unit 104 being supplied with a feedback signal indicating a load current of the LED load 102. The control unit 104 is configured to generate an output signal on the basis of the feedback signal, combine the output signal with a periodic modulation signal in order to obtain a control signal, the control signal being configured to set an operation parameter of the at least one switch 103, apply the control signal to the at least one switch 103.

Moreover, the switched converter 101 comprises an enable/disable means 105 for enabling/disabling the periodic modulation signal, wherein the means for enabling/disabling 105 is configured to enable/disable the periodic modulation signal only at time periods of the periodic modulation signal in which an amplitude of the periodic modulation signal is lower than an amplitude threshold.

The means for enabling/disabling 105 the periodic modulation signal may be configured to only enable/disable the periodic modulation signal at separated time periods of the periodic modulation signal being centered at zero-crossings of the periodic modulation signal.

The means for enabling/disabling 105 may be supplied with a signal indicating the current amplitude or the phase of the modulation signal e.g. in order to delay any enabling/disabling action until the next amplitude.

In an alternative embodiment, the means for enabling/disabling the periodic modulation signal is configured to detect a change in a sign of the modulation signal. The change enable/disable signal thus is delayed until the next zero-crossing event of the modulation signal and will be executed upon detection of the zero-crossing.

In particular, the means for enabling/disabling the periodic modulation signal is configured to detect the change in the sign by detecting that the sign of the measured signal or modulation signal changes from positive to negative values, or vice versa, during the crossing of the zero point. Since a digital evaluation of the signals is performed (sensing by an analog-to-digital converter (ADC) and digital processing of the signals) such evaluation is, advantageously, easy to implement.

The switched converter 101 can be, for example, an LLC resonant converter, a flyback converter or a buck converter.

In general, these switched converters can be feedback controlled, such that the feedback signal is fed to the control unit 104, such as for example a PI regulator, which correspondingly (i.e., applying a control algorithm) issues the output signal on the basis of which, for example, the frequency (or the switch off threshold of a current through the switch) of the switched converter 101 can be set. In order to improve the performance of the switched converter 101, it can be foreseen that the output signal of the control algorithm or control unit 104 is combined with another signal, i.e. the periodic modulation signal, and the combined frequency signal or control signal is actually used for setting the switching frequency of the switched converter 101.

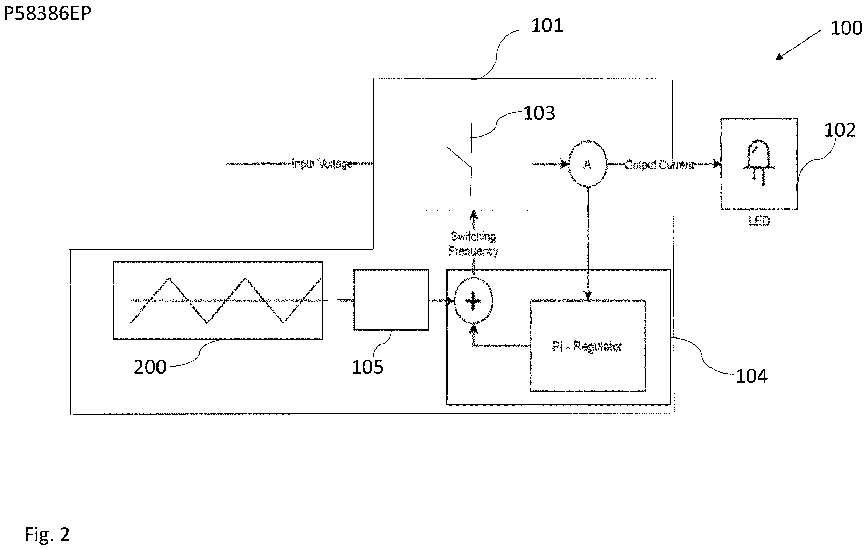

Fig. 2 shows a schematic representation of the LED lighting means 100 comprising the switched converter 101 according to an embodiment of the invention.

In the example shown in Fig. 2, the switched converter 101 further comprises a signal generator 200, which is configured to generate the periodic modulation signal. In this example, the periodic modulation signal is a triangle waveform. This provides the advantage that the performance of the switched converter 101 is improved by reducing the EMI. In fact, by making use of the triangle waveform, the power is spread over a wider frequency range.

In other examples, the periodic modulation signal can be a sinusoidal waveform.

Moreover, in the example shown in Fig. 2, the operation parameter of the switched converter 101 is a switching frequency of the switched converter 101, and it is configured to determine a power provided at the terminals 102a, 102b for supplying the LED load 102.

Therefore, Fig. 2 shows the combination of the output signal of control unit 104, in this example, a PI regulator, with a periodic triangular-shaped artificially generated signal, which leads to a correspondingly periodic modulation of the operation frequency of the switched converter 101. This approach is, typically, used to have a modulation of the switching frequency of the switched converter 101 (in contrast to a non-varying frequency) in order, thus, to improve (broaden) the EMI spectrum.

Moreover, in this embodiment, the control signal directly sets the switching frequency of the switched converter 101.

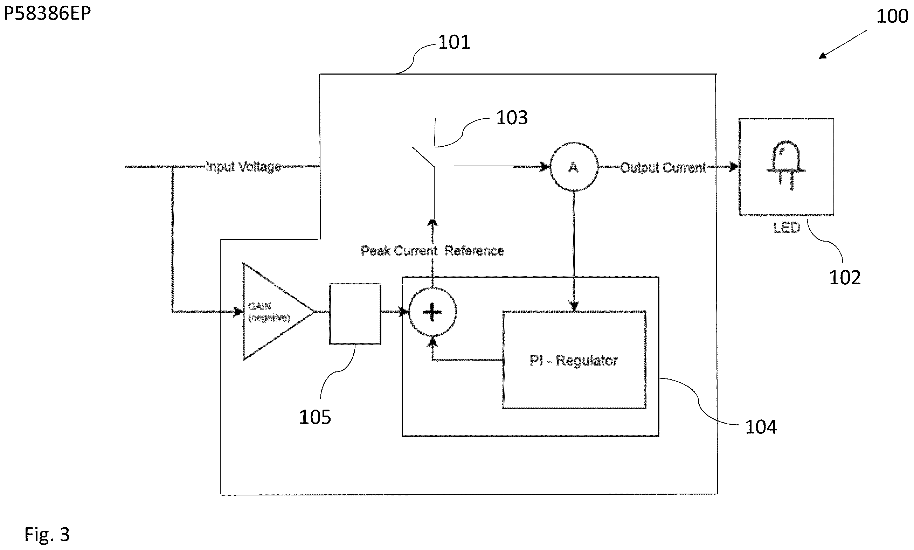

Fig. 3 shows a schematic representation of the LED lighting means 100 comprising the switched converter 101 according to an embodiment of the invention.

In Fig. 3 an implementation of the switched converter 101 is shown in which any ripple in the input voltage is reduced, in case the control unit 104 might not be able to compensate for it. To this regard, an inverted signal of the input ripple of the input DC voltage is added to the output signal of the PI regulator, and the, thus, combined signal or control signal is fed to the switched converter 101. This provides the advantage that the power supply rejection ratio (PSRR) is increased.

The output signal of the PI regulator can directly set the switching frequency (Fig. 2) or indirectly set the frequency by setting thresholds (Fig. 3, in which the peak reference switch-off current through the at least one switch 103 of the switched converter 101 is set by the PI regulator).

Therefore, the control unit 104 can issue a signal setting a switching frequency or can issue a signal setting directly or indirectly a switch-off threshold (in which case the switching frequency might be constant).

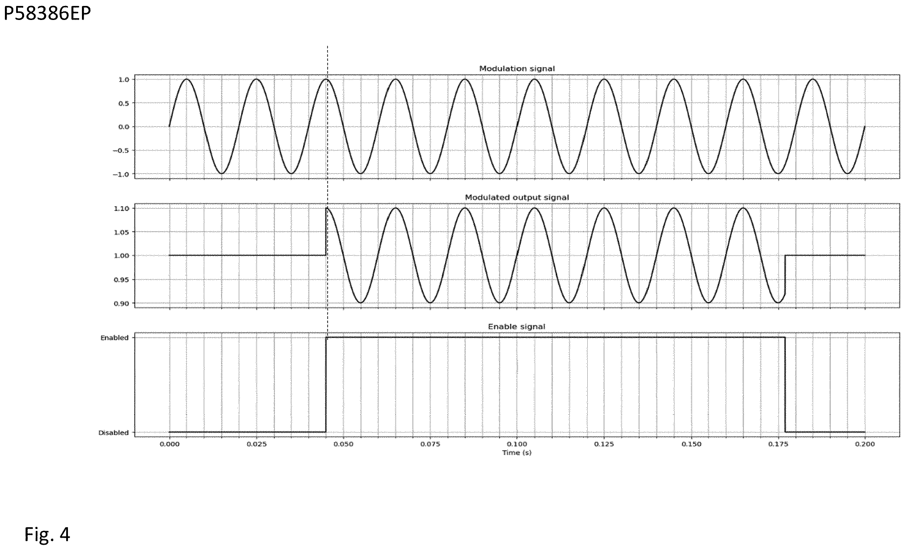

Fig. 4 shows a schematic representation of a modulation signal, a modulated signal, and an enable/disable signal according to prior art.

Both scenarios shown in Fig. 2 and Fig. 3 can lead to the problem that in case the artificial modulation of the frequency or switch-on timing of the switched converter 101 is selectively switched on/off (for example, only enabled at low loads), at the time of enabling or disabling, the periodic modulation signal does not necessarily have a small or zero amplitude, as shown in Fig. 4. In Fig. 4, an example of modulation signal (upper panel), of modulated output signal (middle panel), and enable/disable signal (lower panel) are shown according to prior art. As it can be taken from Fig. 4, the enabling/disabling performed at the peak of the sinusoidal waveform of the modulation signal leads directly to a jump in the modulated signal and, therefore, operation parameter of the switched converter 101 (frequency, switch-on timing, etc.). This is, typically, directly translated in the resulting light output, such that the enabling/disabling of the modulation signal may lead to a visible jump in the light output.

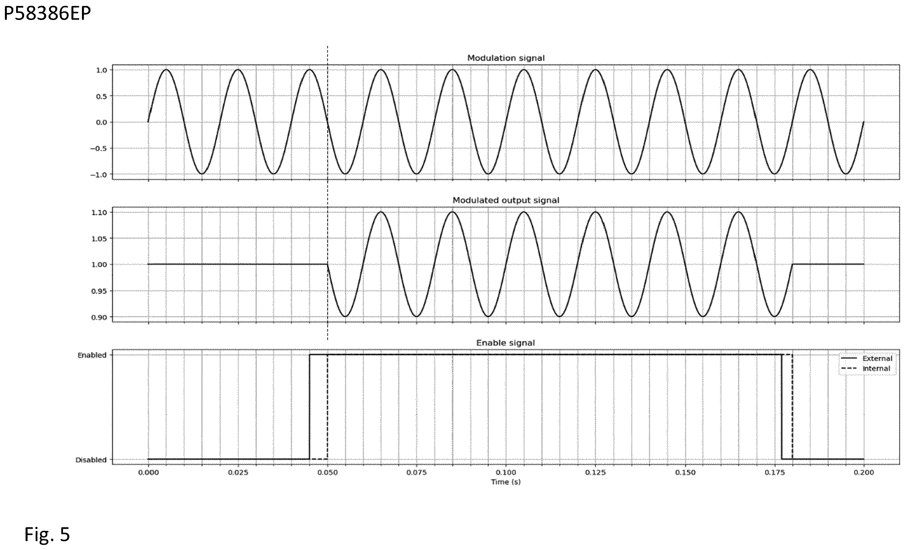

Fig. 5 shows a schematic representation of a modulation signal, a modulated signal, and an enable/disable signal according to an embodiment of the invention.

In order to solve the problems which were illustrated with reference to Fig. 4, according to an embodiment of the invention, the disabling/enabling of this periodic modulation signal can only done at low amplitude of this modulation signal. Ideally, it is the zero crossing of this periodic modulation signal (see Fig. 5). In particular, the disabling/enabling is only done in the next following time period of the periodic signal, in which the amplitude of the periodic signal is, for example, less than 10% of the maximum amplitude.

Typically, this leads to a delay (waiting) until the amplitude has decreased to the predefined threshold. This leads, at the end, to a reduction of the visible light output variation upon enabling/disabling of the periodic modulation signal.

The frequency or switching off threshold represent the operation parameter of the switched converter determining the power provided at the output of the switched converter.

Moreover, the disabling/enabling may represent any modification of a parameter of the periodic modulation signal, which could also be, for example, a change of the frequency or amplitude of the periodic modulation signal.

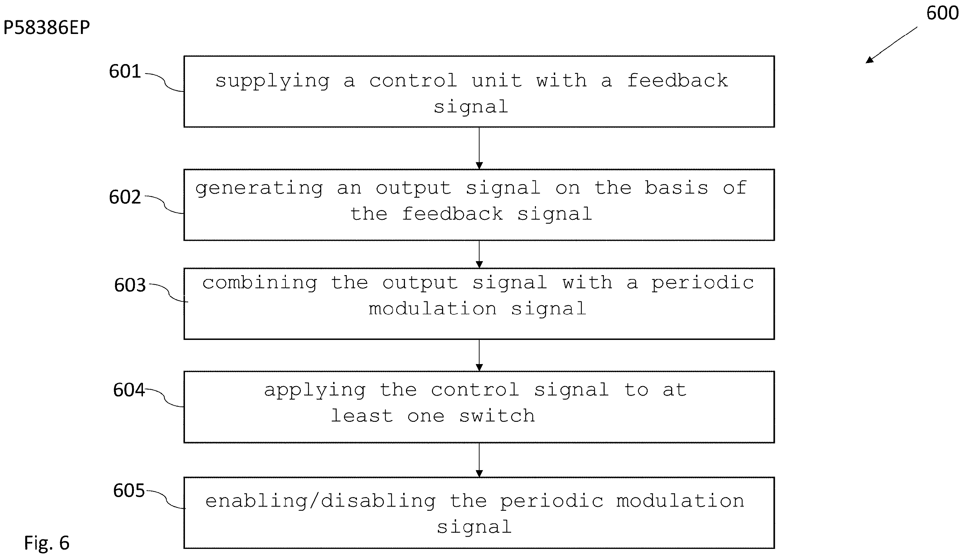

Fig. 6 shows a schematic representation of a method 600 for switching a switched converter 101 for supplying a LED load 102 according to an embodiment of the invention.

The method 600 comprises the steps of:
- supplying 601 a control unit with a feedback signal indicating a load current of the LED load 102;
- generating 602 an output signal on the basis of the feedback signal;

- combining 603 the output signal with a periodic modulation signal in order to obtain a control signal, the control signal being configured to set an operation parameter of the at least one switch 103;
- applying 604 the control signal to at least one switch 103 of the switched converter 101.

In one embodiment, the enabling/disabling 605 the periodic modulation signal only at time periods in which an amplitude of the periodic modulation signal is lower than an amplitude threshold or at first time periods of the periodic modulation signal being centered at zero-crossings of the periodic modulation signal, these first time periods being separated from each other by time periods in which no enabling/disabling of the modulation signal is performed.

In an alternative embodiment, the means for enabling/disabling the periodic modulation signal is configured to detect a change in a sign of the modulation signal. The change enable/disable signal thus is delayed until the next zero-crossing event of the modulation signal and will be executed upon detection of the zero-crossing.

In particular, the means for enabling/disabling the periodic modulation signal is configured to detect the change in the sign by detecting that the sign of the measured signal or modulation signal changes from positive to negative values, or vice versa, during the crossing of the zero point. Since a digital evaluation of the signals is performed (sensing by an analog-to-digital converter (ADC) and digital processing of the signals) such evaluation is, advantageously, easy to implement.

Although the invention has been illustrated and described with respect to one or more implementations, equivalent alternations and modifications will occur to those skilled in the art upon the reading of the understanding of the specification and the annexed drawings. In this respect, the invention is defined by the appended claims.

## Claims

1. A feedback-controlled switched converter (101), comprising:
- at least one switch (103);
- output terminals (102a, 102b) for supplying an LED load (102) ;
- a control unit (104) being supplied with a feedback signal indicating a load current of the LED load (102), wherein the control unit (104) is configured to:
- generate an output signal on the basis of the feedback signal;
- combine the output signal with a periodic modulation signal in order to obtain a control signal, the control signal being configured to set an operation parameter of the at least one switch (103);
- apply the control signal to the at least one switch (103) ;
**characterized by**
- means (105) for enabling and disabling the periodic modulation signal,
o wherein the means (105) for enabling and disabling is configured to perform an enabling or a disabling of the periodic modulation signal only during time periods of the periodic modulation signal in which an amplitude of the periodic modulation signal is lower than an amplitude threshold, or
o wherein the means (105) for enabling and disabling the periodic modulation signal is configured to perform the enabling or the disabling of the periodic modulation signal only during first time periods of the periodic modulation signal being centered at zero-crossings of the periodic modulation signal, these first time periods being separated by second time periods centered around the peaks of the periodic modulation signal and in which no enabling/disabling of the periodic modulation signal is performed, or
o wherein the means (105) for enabling and disabling the periodic modulation signal is configured to perform the enabling or the disabling of the periodic modulation signal only as soon as zero-crossing detection means of the feedback-controlled switched converter (101) indicate a zero-crossing of the modulation signal,
wherein the means (105) for enabling and disabling the periodic modulation signal is configured to disable the periodic modulation signal when the load at the output terminals (102a, 102b) is low and to enable the periodic modulation signal when the load at the output terminals (102a, 102b) is high,
wherein the means (105) for enabling and disabling the periodic modulation signal is configured to detect a maximum amplitude of the periodic modulation signal and wherein the amplitude threshold is less than 10% of the maximum amplitude of the periodic modulation signal.

2. The feedback-controlled switched converter (101) of claim 1, wherein the feedback-controlled switched converter (101) further comprises a signal generator (200), wherein the signal generator (200) is configured to generate the periodic modulation signal.

3. The feedback-controlled switched converter (101) of claim 1, wherein the periodic modulation signal is derived from a signal within the feedback-controlled switched converter (101), such as e.g. a ripple in the DC supply voltage of the feedback-controlled switched converter (101).

4. The feedback-controlled switched converter (101) of any one of the preceding claims, wherein the periodic modulation signal is a triangle waveform or a sinusoidal waveform.

5. The feedback-controlled switched converter (101) of any one of the preceding claims 1 or 3, wherein the periodic modulation signal is based on an inverted input voltage of the feedback-controlled switched converter.

6. The feedback-controlled switched converter (101) of any one of the preceding claims, wherein the operation parameter of the feedback-controlled switched converter (101), such as a switching frequency or a peak current value of the switched converter, is configured to determine a power provided at the terminals (102a, 102b) for supplying the LED load (102).

7. The feedback-controlled switched converter (101) of any one of the preceding claims, wherein the control unit (104) comprises a proportional integral, PI, regulator.

8. The feedback-controlled switched converter (101) of any one of the preceding claims, wherein the feedback-controlled switched converter (101) is an LLC converter, flyback converter or buck converter.

9. LED lighting means (101) comprising the feedback-controlled switched converter (101) according to any one of the preceding claims 1 to 8 and an LED load (102) connected to said output terminals (102a, 102b) of the feedback-controlled switched converter (101).

10. Method (600) for switching a feedback-controlled switching converter (101) for supplying an LED load (102), comprising the steps of:
- supplying (601) a control unit (104) with a feedback signal indicating a load current of the LED load (102);
- generating (602) an output signal on the basis of the feedback signal;
- combining (603) the output signal with a periodic modulation signal in order to obtain a control signal, the control signal being configured to set an operation parameter of the at least one switch (103);
- applying (604) the control signal to at least one switch (103) of the feedback-controlled switched converter (101);
**characterized by the steps of:**
- performing enabling or disabling the periodic modulation signal only during time periods of the periodic modulation signal in which an amplitude of the periodic modulation signal is lower than an amplitude threshold, or
- performing enabling or disabling (605) the periodic modulation signal only during first time periods of the periodic modulation signal being centered at zero-crossings of the periodic modulation signal, the first time periods being separated from each other by second time periods in which no enabling/disabling is performed of the periodic modulation signal, or
- performing enabling or disabling (605) the periodic modulation signal only upon detection of a zero-crossing of the modulation signal,
wherein the method (600) further comprises the step of:
- disabling the periodic modulation signal when the load at the output terminals (102a, 102b) is low and enabling the periodic modulation signal when the load at the output terminals (102a, 102b) is high,
- detecting a maximum amplitude of the periodic modulation signal, wherein the amplitude threshold is less than 10% of the maximum amplitude of the periodic modulation signal.

11. The method (600) of claim 10, wherein the method (600) further comprises the step of:
- generating the periodic modulation signal by a signal generator in the feedback-controlled switched converter (101).

12. The method (600) of claim 10, wherein the method further comprises the step of:
- deriving the periodic modulation signal from a signal within the converter (101), such as e.g. a ripple in the DC supply voltage of the feedback-controlled switched converter (101) .

## Patentansprüche

1. Rückkopplungsgesteuerter geschalteter Wandler (101), umfassend:
- mindestens einen Schalter (103);
- Ausgangsanschlüsse (102a, 102b) zum Liefern einer LED-Last (102);
- eine Steuereinheit (104), die mit einem Rückkopplungssignal versorgt wird, das einen Laststrom der LED-Last (102) angibt, wobei die Steuereinheit (104) konfiguriert ist zum:
- Generieren eines Ausgangssignals auf der Basis des Rückkopplungssignals;
- Kombinieren des Ausgangssignals mit einem periodischen Modulationssignal, um ein Steuersignal zu erhalten, wobei das Steuersignal konfiguriert ist, um einen Betriebsparameter des mindestens einen Schalters (103) einzustellen;
- Anlegen des Steuersignals an den mindestens einen Schalter (103);
**gekennzeichnet durch**
- ein Mittel (105) zum Aktivieren und Deaktivieren des periodischen Modulationssignals,
∘ wobei das Mittel (105) zum Aktivieren und Deaktivieren konfiguriert ist, um ein Aktivieren oder ein Deaktivieren des periodischen Modulationssignals nur während Zeiträumen des periodischen Modulationssignals durchzuführen, in denen eine Amplitude des periodischen Modulationssignals niedriger als ein Amplitudenschwellenwert ist, oder
∘ wobei das Mittel (105) zum Aktivieren und Deaktivieren des periodischen Modulationssignals konfiguriert ist, um das Aktivieren oder das Deaktivieren des periodischen Modulationssignals nur während erster Zeiträume des periodischen Modulationssignals durchzuführen, die auf Nulldurchgänge des periodischen Modulationssignals zentriert sind, wobei diese ersten Zeiträume durch zweite Zeiträume getrennt sind, die um die Spitzen des periodischen Modulationssignals herum zentriert sind und in denen kein Aktivieren/Deaktivieren des periodischen Modulationssignals durchgeführt wird, oder
o wobei das Mittel (105) zum Aktivieren und Deaktivieren des periodischen Modulationssignals konfiguriert ist, um das Aktivieren oder das Deaktivieren des periodischen Modulationssignals erst dann durchzuführen, wenn Nulldurchgangserkennungsmittel des rückkopplungsgesteuerten geschalteten Wandlers (101) einen Nulldurchgang des Modulationssignals angeben,
wobei das Mittel (105) zum Aktivieren und Deaktivieren des periodischen Modulationssignals konfiguriert ist, um das periodische Modulationssignal zu deaktivieren, wenn die Last an den Ausgangsanschlüssen (102a, 102b) niedrig ist, und um das periodische Modulationssignal zu aktivieren, wenn die Last an den Ausgangsanschlüssen (102a, 102b) hoch ist,
wobei das Mittel (105) zum Aktivieren und Deaktivieren des periodischen Modulationssignals konfiguriert ist, um eine maximale Amplitude des periodischen Modulationssignals zu erkennen, und wobei der Amplitudenschwellenwert geringer als 10 % der maximalen Amplitude des periodischen Modulationssignals ist.

2. Rückkopplungsgesteuerter geschalteter Wandler (101) nach Anspruch 1, wobei der rückkopplungsgesteuerte geschaltete Wandler (101) ferner einen Signalgenerator (200) umfasst, wobei der Signalgenerator (200) konfiguriert ist, um das periodische Modulationssignal zu generieren.

3. Rückkopplungsgesteuerter geschalteter Wandler (101) nach Anspruch 1, wobei das periodische Modulationssignal von einem Signal innerhalb des rückkopplungsgesteuerten geschalteten Wandlers (101) abgeleitet wird, wie z. B. einer Welligkeit in der Gleichstromversorgungsspannung des rückkopplungsgesteuerten geschalteten Wandlers (101).

4. Rückkopplungsgesteuerter geschalteter Wandler (101) nach einem der vorstehenden Ansprüche, wobei das periodische Modulationssignal eine Dreieckswellenform oder eine Sinuswellenform ist.

5. Rückkopplungsgesteuerter geschalteter Wandler (101) nach einem der vorstehenden Ansprüche 1 oder 3, wobei das periodische Modulationssignal auf einer invertierten Eingangsspannung des rückkopplungsgesteuerten geschalteten Wandlers basiert.

6. Rückkopplungsgesteuerter geschalteter Wandler (101) nach einem der vorstehenden Ansprüche, wobei der Betriebsparameter des rückkopplungsgesteuerten geschalteten Wandlers (101), wie eine Schaltfrequenz oder ein Spitzenstrombetrag des geschalteten Wandlers, konfiguriert ist, um eine Leistung, die an den Anschlüssen (102a, 102b) zum Liefern der LED-Last (102) bereitgestellt wird, zu bestimmen.

7. Rückkopplungsgesteuerter geschalteter Wandler (101) nach einem der vorstehenden Ansprüche, wobei die Steuereinheit (104) einen Proportional-Integral-Regler, PI-Regler, umfasst.

8. Rückkopplungsgesteuerter geschalteter Wandler (101) nach einem der vorstehenden Ansprüche, wobei der rückkopplungsgesteuerte geschaltete Wandler (101) ein LLC-Wandler, ein Sperrwandler oder ein Abwärtswandler ist.

9. LED-Beleuchtungsmittel (101), umfassend den rückkopplungsgesteuerten geschalteten Wandler (101) nach einem der vorstehenden Ansprüche 1 bis 8 und eine LED-Last (102), die mit den Ausgangsanschlüssen (102a, 102b) des rückkopplungsgesteuerten geschalteten Wandlers (101) verbunden ist.

10. Verfahren (600) zum Schalten eines rückkopplungsgesteuerten geschalteten Wandlers (101) zum Liefern einer LED-Last (102), umfassend die Schritte:
- Versorgen (601) einer Steuereinheit (104) mit einem Rückkopplungssignal, das einen Laststrom der LED-Last (102) angibt;
- Generieren (602) eines Ausgangssignals auf der Basis des Rückkopplungssignals;
- Kombinieren (603) des Ausgangssignals mit einem periodischen Modulationssignal, um ein Steuersignal zu erhalten, wobei das Steuersignal konfiguriert ist, um einen Betriebsparameter des mindestens einen Schalters (103) einzustellen;
- Anlegen (604) des Steuersignals an mindestens einen Schalter (103) des rücckopplungsgesteuerten geschalteten Wandlers (101);
**gekennzeichnet durch** die Schritte:
- Durchführen des Aktivierens oder Deaktivierens des periodischen Modulationssignals nur während Zeiträumen des periodischen Modulationssignals, in denen eine Amplitude des periodischen Modulationssignals niedriger als ein Amplitudenschwellenwert ist, oder
- Durchführen des Aktivierens oder Deaktivierens (605) des periodischen Modulationssignals nur während erster Zeiträume des periodischen Modulationssignals, die auf Nulldurchgänge des periodischen Modulationssignals zentriert sind, wobei die ersten Zeiträume durch zweite Zeiträume voneinander getrennt sind, in denen kein Aktivieren/Deaktivieren des periodischen Modulationssignals durchgeführt wird, oder
- Durchführen des Aktivierens oder Deaktivierens (605) des periodischen Modulationssignals nur bei Erkennung eines Nulldurchgangs des Modulationssignals,
wobei das Verfahren (600) ferner die Schritte umfasst:
- Deaktivieren des periodischen Modulationssignals, wenn die Last an den Ausgangsanschlüssen (102a, 102b) niedrig ist, und Aktivieren des periodischen Modulationssignals, wenn die Last an den Ausgangsanschlüssen (102a, 102b) hoch ist,
- Erkennen einer maximalen Amplitude des periodischen Modulationssignals, wobei der Amplitudenschwellenwert geringer als 10 % der maximalen Amplitude des periodischen Modulationssignals ist.

11. Verfahren (600) nach Anspruch 10, wobei das Verfahren (600) ferner den Schritt umfasst:
- Generieren des periodischen Modulationssignals durch einen Signalgenerator in dem rückkopplungsgesteuerten geschalteten Wandler (101).

12. Verfahren (600) nach Anspruch 10, wobei das Verfahren ferner den Schritt umfasst:
- Ableiten des periodischen Modulationssignals von einem Signal innerhalb des Wandlers (101), wie z. B. einer Welligkeit in der Gleichstromversorgungsspannung des rückkopplungsgesteuerten geschalteten Wandlers (101).

## Revendications

1. Convertisseur commuté commandé par rétroaction (101), comprenant :
- au moins un commutateur (103) ;
- des bornes de sortie (102a, 102b) permettant d'alimenter une charge de DEL (102) ;
- une unité de commande (104) étant alimentée par un signal de retour indiquant un courant de charge de la charge DEL (102), dans lequel l'unité de commande (104) est configurée pour :
- générer un signal de sortie sur la base du signal de retour ;
- combiner le signal de sortie avec un signal de modulation périodique afin d'obtenir un signal de commande, le signal de commande étant configuré pour définir un paramètre de fonctionnement de l'au moins un commutateur (103) ;
- appliquer le signal de commande à l'au moins un commutateur (103) ;
**caractérisé par**
- des moyens (105) pour activer et désactiver le signal de modulation périodique,
∘ dans lequel le moyen (105) d'activation et de désactivation est configuré pour effectuer une activation ou une désactivation du signal de modulation périodique uniquement pendant les laps de temps du signal de modulation périodique dans lesquels une amplitude du signal de modulation périodique est inférieure à un seuil d'amplitude, ou
∘ dans lequel le moyen (105) d'activation et de désactivation du signal de modulation périodique est configuré pour effectuer l'activation ou la désactivation du signal de modulation périodique uniquement pendant les premiers laps de temps du signal de modulation périodique centrée au niveau des passages à zéro du signal de modulation périodique, ces premiers laps de temps étant séparés par de seconds laps de temps centrés autour des crêtes du signal de modulation périodique et dans lesquels aucune activation/désactivation du signal de modulation périodique n'est effectuée, ou
∘ dans lequel le moyen (105) d'activation et de désactivation du signal de modulation périodique est configuré pour effectuer l'activation ou la désactivation du signal de modulation périodique uniquement dès que les moyens de détection de passage à zéro du convertisseur commuté commandé par rétroaction (101) indiquent un passage à zéro du signal de modulation,
dans lequel le moyen (105) d'activation et de désactivation du signal de modulation périodique est configuré pour désactiver le signal de modulation périodique lorsque la charge aux bornes de sortie (102a, 102b) est faible et pour activer le signal de modulation périodique lorsque la charge aux bornes de sortie (102a, 102b) est élevée,
dans lequel le moyen (105) d'activation et de désactivation du signal de modulation périodique est configuré pour détecter une amplitude maximale du signal de modulation périodique et dans lequel le seuil d'amplitude est inférieur à 10 % de l'amplitude maximale du signal de modulation périodique.

2. Convertisseur commuté commandé par rétroaction (101) selon la revendication 1, dans lequel le convertisseur commuté commandé par rétroaction (101) comprend en outre un générateur de signal (200), dans lequel le générateur de signal (200) est configuré pour générer le signal de modulation périodique.

3. Convertisseur commuté commandé par rétroaction (101) selon la revendication 1, dans lequel le signal de modulation périodique est dérivé d'un signal à l'intérieur du convertisseur commuté commandé par rétroaction (101), comme par exemple une ondulation de la tension d'alimentation continue du convertisseur commuté commandé par rétroaction (101).

4. Convertisseur commuté commandé par rétroaction (101) selon l'une quelconque des revendications précédentes, dans lequel le signal de modulation périodique est une forme d'onde triangulaire ou une forme d'onde sinusoïdale.

5. Convertisseur commuté commandé par rétroaction (101) selon l'une quelconque des revendications précédentes 1 ou 3, dans lequel le signal de modulation périodique est en fonction d'une tension d'entrée inversée du convertisseur commuté commandé par rétroaction.

6. Convertisseur commuté commandé par rétroaction (101) selon l'une quelconque des revendications précédentes, dans lequel le paramètre de fonctionnement du convertisseur commuté commandé par rétroaction (101), tel qu'une fréquence de commutation ou une valeur de courant de crête du convertisseur commuté, est configuré pour déterminer une puissance fournie aux bornes (102a, 102b) pour l'alimentation de la charge DEL (102).

7. Convertisseur commuté commandé par rétroaction (101) selon l'une quelconque des revendications précédentes, dans lequel l'unité de commande (104) comprend un régulateur proportionnel intégral (PI).

8. Convertisseur commuté commandé par rétroaction (101) selon l'une quelconque des revendications précédentes, dans lequel le convertisseur commuté commandé par rétroaction (101) est un convertisseur LLC, un convertisseur indirect ou un convertisseur abaisseur.

9. Moyen d'éclairage à DEL (101) comprenant le convertisseur commuté commandé par rétroaction (101) selon l'une quelconque des revendications précédentes 1 à 8 et une charge à DEL (102) connectée auxdites bornes de sortie (102a, 102b) du convertisseur commuté commandé par rétroaction (101).

10. Procédé (600) de commutation d'un convertisseur de commutation par rétroaction (101) destiné à alimenter une charge à DEL (102), comprenant les étapes suivantes :
- la fourniture (601) à une unité de commande (104) d'un signal de retour indiquant un courant de charge de la charge à DEL (102) ;
- la génération (602) d'un signal de sortie sur la base du signal de retour ;
- la combinaison (603) du signal de sortie avec un signal de modulation périodique afin d'obtenir un signal de commande, le signal de commande étant configuré pour définir un paramètre de fonctionnement de l'au moins un commutateur (103) ;
- l'application (604) du signal de commande à au moins un commutateur (103) du convertisseur commuté commandé par rétroaction (101) ;
**caractérisé par** les étapes suivantes :
- l'activation ou la désactivation du signal de modulation périodique uniquement pendant les laps de temps du signal de modulation périodique dans lesquels une amplitude du signal de modulation périodique est inférieure à un seuil d'amplitude, ou
- l'activation ou la désactivation (605) du signal de modulation périodique uniquement pendant les premiers laps de temps où le signal de modulation périodique est centré sur les passages à zéro du signal de modulation périodique, les premiers laps de temps étant séparés les uns des autres par de seconds laps de temps dans lesquels aucune activation/désactivation du signal de modulation périodique n'est effectuée, ou
- l'activation ou la désactivation (605) du signal de modulation périodique uniquement après détection d'un passage à zéro du signal de modulation,
dans lequel le procédé (600) comprend en outre l'étape consistant à :
- la désactivation du signal de modulation périodique lorsque la charge aux bornes de sortie (102a, 102b) est faible et l'activation du signal de modulation périodique lorsque la charge aux bornes de sortie (102a, 102b) est élevée,
- la détection d'une amplitude maximale du signal de modulation périodique, dans lequel le seuil d'amplitude est inférieur à 10 % de l'amplitude maximale du signal de modulation périodique.

11. Procédé (600) selon la revendication 10, dans lequel le procédé (600) comprend en outre l'étape consistant à :
- la génération du signal de modulation périodique à l'aide d'un générateur de signal dans le convertisseur commuté commandé par rétroaction (101).

12. Procédé (600) selon la revendication 10, dans lequel le procédé comprend en outre l'étape consistant à :
- la dérivation du signal de modulation périodique à partir d'un signal à l'intérieur du convertisseur (101), tel qu'une ondulation de la tension d'alimentation continue du convertisseur commuté commandé par rétroaction (101).
